# EUROPÄISCHE PATENTSCHRIFT

(11) **EP 2 144 794 B1**
(45) Veröffentlichungstag und Bekanntmachung des Hinweises auf die Patenterteilung: **02.01.2013**
(21) Anmeldenummer: 08735777.8
(22) Anmeldetag: 03.04.2008
(51) Int. Cl.: B60T 8/1761, B60L 7/26

(54) **VERFAHREN ZUM BETRIEB EINER FAHRZEUGBREMSANLAGE SOWIE FAHRZEUGBREMSANLAGE**
METHOD FOR OPERATING A VEHICLE BRAKE SYSTEM AND VEHICLE BRAKE SYSTEM
PROCÉDÉ DE FONCTIONNEMENT D'UN SYSTÈME DE FREINAGE DE VÉHICULE ET SYSTÈME DE FREINAGE DE VÉHICULE

(30) Priorität: 05.04.2007 DE 102007016424; 03.04.2008 DE 102008017480
(43) Veröffentlichungstag der Anmeldung: 20.01.2010
(73) Patentinhaber: Continental Teves AG & Co. OHG, 60488 Frankfurt (DE)
(72) Erfinder: JÄGER, Markus, 65760 Eschborn (DE); KERBER, Henning, 65824 Schwalbach am Taunus (DE); MÜLLER, Roger-Lutz, 55252 Mainz-Kastel (DE)
(86) Internationale Anmeldenummer: PCT/EP2008/054034
(87) Internationale Veröffentlichungsnummer: WO 2008/122572

(56) Entgegenhaltungen:
- US-A- 5 511 859
- US-A1- 2003 062 770
- US-A1- 2003 074 125
- US-A1- 2004 046 448

## Beschreibung

Die vorliegende Erfindung betrifft ein Verfahren zum Betrieb einer Fahrzeugbremsanlage sowie eine Fahrzeugbremsanlage, insbesondere für Kraftfahrzeuge mit mindestens einer Vorderachse und mindestens einer Hinterachse, wobei jeder Achse mindestens zwei Fahrzeugräder zugeordnet sind, wobei mindestens eine ein Bremsmoment erzeugende, vorzugsweise hydraulisch betätigbare Radbremse an der mindestens einen Vorderachse und/oder der mindestens einen Hinterachse vorgesehen ist, wobei die einer Achse zugeordneten Fahrzeugräder zumindest teilweise von einem Elektromotor angetrieben werden, der während einer Rekuperation von Bremsenergie als Generator betreibbar ist und dabei ein bremsendes Rekuperationsmoment auf die jeweilige Achse ausübt.

In Kraftfahrzeugen werden zum Betrieb einer Fahrzeugbremsanlage Radbremsen bereitgestellt, die hydraulisch oder elektromechanisch betätigbar sind. In der Regel sind die hydraulisch betätigbaren Radbremsen an mindestens einer der Vorderachsen und ggf. elektromechanisch betätigbaren Radbremsen an mindestens einer der Hinterachsen des Kraftfahrzeugs angeordnet.

In Fahrzeugen mit einem Hybridantrieb kann der Antrieb sowohl über einen Verbrennungsmotor als auch über einen Elektromotor erfolgen; in einem Elektrofahrzeug erfolgt der Antrieb ausschließlich durch den Elektromotor. Der Elektromotor ist hierfür mit einer oder mehreren Achsen des Kraftfahrzeugs verbunden und treibt diese an. In dem Betriebszustand des sogenannten Rekuperationsbetriebs (auch Rekuperationsbremsen genannt, Rekuperation = Rückgewinnung) kann der Elektromotor, beispielsweise bei Verzögerungsmanövern oder bei Bergabfahrten, bei denen das geforderte Antriebsmoment negativ ist, generatorisch betrieben werden, somit ohne Einsatz von Kraftstoff elektrische Energie erzeugen und dabei gleichzeitig die Bremsen schonen. Dadurch kann der Energieverbrauch des Kraftfahrzeugs insgesamt gesenkt, der Wirkungsgrad erhöht, der Bremsenverschleiß minimiert und der Betrieb des Kraftfahrzeugs damit wirtschaftlicher gestaltet werden. Das Potential der BremsenergieRückgewinnung ergibt sich aus dem Verhältnis des Rekuperationsmoments zu dem Gesamtbremsmoment und ist außerdem abhängig von der Möglichkeit der Verteilung des Rekuperationsmoments auf Vorder- und Hinterachse.

Kraftfahrzeuge mit einem Bremssystem, das für Rekuperationsbremsungen ausgelegt ist, weisen dazu in der Regel verschiedene Arten von Bremsen auf, die auch Bremsaktuatoren genannt werden.

In der Regel werden als konventionelle Bremsen in Hybridfahrzeugen ein Paar hydraulischer Reibbremsen für die Abbremsung der Vorderachs-Räder und/oder für die Hinterachs-räder, wie sie aus gewöhnlichen Kraftfahrzeugen bekannt sind, eingesetzt. Alternativ oder zusätzlich kann ein Paar elektromechanisch betätigbarer Reibbremsen vorzugsweise für die Abbremsung der Hinterachs-Räder verwendet werden. Über den Generator bzw. den sich im Generatorbetrieb befindlichen Elektromotor wird üblicherweise zumindest ein Teil der gesamten erforderlichen oder vom Fahrer gewünschten Bremskraft aufgebracht. Die hierbei gewonnene elektrische Energie wird in ein Speichermedium, wie beispielsweise eine Bordbatterie, ein- bzw. zurückgespeist und für den Antrieb des Kraftfahrzeuges über einen geeigneten Antrieb wiederverwendet.

Während der Abbremsung eines Fahrzeuges, das einen Elektromotor aufweist, dessen Generatorbetrieb zur Rückgewinnung von Bremsenergie dient, wird zusätzlich zum Bremsmoment der herkömmlichen hydraulisch und elektromechanisch betätigbaren Radbremsen ein weiteres Bremsmoment, das sogenannte Rekuperationsmoment erzeugt, das vom Elektromotor aufgebracht wird. Dieses Bremsmoment des Elektromotors entsteht aus dem bekannten generatorischen Effekt bei Elektromotoren, die bei mechanischem Antreiben ohne Zuführung von elektrischem Strom als Dynamo bzw. Generator wirken und elektrischen Strom generieren. Dabei entsteht eine Gegenkraft, die dem mechanischen Antrieb entgegenwirkt und im vorliegenden Fall als Bremsmoment wirkt. Die gesamte Bremskraft des Kraftfahrzeugs setzt sich daher aus der Bremskraft der hydraulisch betätigbaren Radbremsen, der Bremskraft der elektromechanisch betätigbaren Radbremsen und der Bremskraft des als Generator wirkenden Elektromotors (Rekuperationsmoment, regeneratives Bremsmoment) zusammen.

Dokument US 2004/046448 offenbart die Oberbegriffe der Ansprüchen 1 und 8. Dokument US 2003/0062770 beschreibt eine Erhähung des regeneratinen Bremsens an der Vorderahse eines Fahrungs

Aus der DE 103 19 663 A1 ist ein Verfahren zur Einstellung der Pedalkennlinie eines Hybrid-Bremssystems bei veränderter Bremskraftverteilung bekannt. Bei dem vorbekannten Verfahren zum Betrieb einer Bremsanlage, das ein hydraulisches Betriebsbremssystem und ein elektrisches Betriebsbremssystem mit Radbremsen umfasst, die bei Betätigung eines Bremspedals mit Bremsdruck beaufschlagt werden, steuert eine Steuereinrichtung einen Bremsdruckmodulator des hydraulischen Betriebsbremssystems und das elektrische Betriebsbremssystem derart an, dass bei einer Änderung der Bremskraftverteilung zwischen dem hydraulischen und dem elektrischen Betriebsbremssystem das Verhältnis von Pedalkraft und/oder Pedalweg zu dem Fahrzeug-Gesamtbremsmoment im wesentlichen konstant bleibt. Ein als Generator betreibbarer Elektromotor ist nicht vorgesehen.

Bei Fahrzeugen mit einem Hybridantrieb bzw. einem (ausschließlich) elektrischen Antrieb wird der elektrische Generator an einer oder mehreren der Achsen des Fahrzeugs aktiv, sobald der Fahrer vom Gaspedal geht oder bremst. Hierdurch wirkt das durch die Rekuperation erzeugte Rekuperationsmoment, das zu einer Reduktion des Kraftschlusses an den Fahrzeugrädern bis hin zum Verlust des Kraftschlusses führt. Tritt dieses zusätzliche Rekuperationsmoment verstärkt an der Hinterachse auf, spricht man vom Überbremsen der Hinterachse. Durch Überbremsen verliert das Kraftfahrzeug seine Fahrstabilität, so dass das Fahrzeug ausbricht oder schleudert.

Fahrdynamisch kritisch kann es werden, wenn sich die Bremskraftverteilung in Richtung der Hinterachse verschiebt. Bei Fahrzeugen, bei denen der Generator ausschließlich / hauptsächlich auf die Hinterachse wirkt, geht eine starke Abbremsung der Hinterachse für möglichst hohe Energierückgewinnung einher mit der Gefahr der Überbremsung der Hinterachse. Aus diesem Grund ist ein elektronisches Fahrdynamikregelsystem zur Wiederherstellung einer möglichen, durch das Antriebskonzept verursachten Instabilität praktisch unverzichtbar.

Herkömmliche Strategien zur Steuerung des Generatormoments erlauben eine uneingeschränkte Rekuperation so lange, bis die elektronische Bremskraftverteilungsregelung (EBD) aufgrund einer Rad- oder Fahrzeuginstabilität eingreift. In diesem Fall wird die Rekuperation häufig abgebrochen und anschließend konventionell weitergebremst. Ein Nachteil dieser Strategie ist, dass die kritische Situation, die das EBD zum Eingreifen zwingt, durch die Rekuperationsstrategie selbst verursacht wird. Dadurch erhöht sich die Anzahl der Pumpen- und Ventilaktivitäten signifikant, was bei der Auslegung des hydraulischen Systems berücksichtigt werden muss.

Aufgabe der Erfindung ist es demnach, ein verbessertes Verfahren zum Betrieb einer Fahrzeugbremsanlage anzugeben bzw. eine verbesserte Fahrzeugbremsanlage zu schaffen, so dass ein Überbremsen an einer der Hinterachsen des Kraftfahrzeugs verhindert wird sowie unnötige Pumpen- und Ventilaktivitäten vermieden werden.

Die obige Aufgabenstellung wird gelöst durch ein Verfahren bzw. eine Fahrzeugbremsanlage, wobei das an der mindestens einen Hinterachse anliegende Rekuperationsmoment derart begrenzt wird, dass der an mindestens einem Fahrzeugrad dieser Hinterachse anliegende Schlupf eine jeweils diesem Fahrzeugrad individuell zugeordnete erste Schlupfschwelle nicht oder nur unwesentlich überschreitet.

Bei Bremsvorgängen ist neben anderen Größen der am jeweiligen Reifen vorhandene Schlupf von hoher Bedeutung. Als Reifenschlupf (meist in Prozent angegeben) wird das Verhältnis eines angetriebenen Reifens zu einem leer mitlaufenden Rad bezeichnet, wobei der Schlupf im Falle des Bremsens zwischen 0% (leer mitlaufendes Rad und angetriebener Reifen drehen sich gleich schnell) und 100% (Blockieren der Reifen) liegt. Bei einem Schlupfwert, der meist unter 20% liegt, hat die Reibwert-Schlupf-Kurve ein Maximum, in dem die Kraftübertragung des Reifens auf den Untergrund optimal ist. Deshalb wird mittels einer Schlupfregelung der Schlupf so geregelt, dass er unter diesen Maximalwert liegt, da oberhalb des Maximalwerts ein Kraftschlussabriss erfolgt.

Durch die sensible erfindungsgemäße Schlupfüberwachung wird einerseits die höchste Kraftschlussausnutzung erreicht und andererseits ein Kraftschlussabriss verhindert. Hierbei wird, noch ehe das EBD eingreift, aufgrund der Schlupferkennung der regenerative Bremsmomentanteil reduziert, so dass die Häufigkeit von EBD-Einsätzen reduziert wird.

In einem bevorzugten Ausführungsbeispiel ist vorgesehen, dass die einem Fahrzeugrad individuell zugeordnete erste Schlupfschwelle veränderlich ist. Sie wird den geänderten Fahrzeug- und Umweltbedingungen, z.B. der Untergrundbeschaffenheit oder dem Reifenmaterial angepasst. Zudem kann die erste Schlupfschwelle für jedes der an einer Achse angeordneten Räder unterschiedlich sein.

Eine besonders hohe Betriebssicherheit und eine weitere Reduzierung der Pumpen- und Ventilaktivität wird dadurch erreicht, dass die Begrenzung des Rekuperationsmoments durch die Betrachtung des Schlupfes des Fahrzeugrades der mindestens einen Hinterachse erfolgt, das den größeren Schlupf aufweist.

In einem weiteren Ausführungsbeispiel wird zusätzlich das an der mindestens einen Hinterachse anliegende Rekuperationsmoment dann erhöht, wenn der an mindestens einem Fahrzeugrad dieser Hinterachse anliegende Schlupf eine diesem Fahrzeugrad individuell zugeordnete zweite Schlupfschwelle unterschreitet. Durch diese maximale Ausnutzung des Kraftschlusspotentials lässt sich die Effektivität der Rekuperation erhöhen und somit Kraftstoff sparen. Hierbei wird ebenfalls eine besonders hohe Betriebssicherheit und eine weitere Reduzierung der Pumpen- und Ventilaktivität dadurch erreicht, dass die Änderung des Rekuperationsmoments bei Unterschreitung der zweiten Schlupfschwelle des Fahrzeugrades der mindestens einen Hinterachse erfolgt, das den größeren Schlupf aufweist.

Besonders effektiv und somit kraftstoffsparend lässt sich das Fahrzeug betreiben, wenn das Rekuperationsmoment dadurch begrenzt wird, dass die Verteilung der Gesamtbremskraft zwischen der konventionellen und der rekuperativen Bremse verändert wird. Bei einem derartigen Verfahren kann beispielsweise bei Überschreitung der ersten Schlupfschwelle an der Hinterachse ein Teil des regenerativen Moments auf die Vorderachse verteilt werden. Hierdurch wird nach wie vor die gleiche Energie durch Rekuperation gewonnen, jedoch kann die an der Hinterachse vorliegende Instabilität beseitigt werden. Eine derartige Verteilung des Rekuperationsmoments ist möglich, wenn der Antriebsstrang eine variable Verteilung dieses Moments ermöglicht oder mehrere Generatoren, die auf verschiedene Achsen wirken, zum Einsatz kommen. Andernfalls kann der Anteil der konventionellen Bremskraft an der Gesamtbremskraft erhöht werden, wobei der erhöhte Anteil insbesondere an einer der Vorderachsen wirkt.

In einem weiteren Ausführungsbeispiel hängt die Größe der Änderung des Rekuperationsmoments von dem Abstand des ermittelten Schlupfes von der ersten Schlupfschwelle oder der zweiten Schlupfschwelle ab. Durch ein derartiges Verfahren wird eine schnelle Einregelung des Rekuperationsmoments bzw. des Schlupfs erreicht.

Bevorzugt wird zur Berechnung des Schlupfes zusätzlich die der Fahrzeugbeschleunigung und die zeitlich gefilterte Radbeschleunigung herangezogen, da über den Vergleich der Radbeschleunigung mit der Fahrzeugbeschleunigung (bzw. - verzögerung), der die Schlupfzunahme ergibt, eine sich abzeichnende Instabilität bereits früh erkannt werden kann. Die Erkennung kann früher erfolgen als wenn darauf gewartet wird, dass der lediglich aus der Radgeschwindigkeit berechnete Schlupf die Schlupfschwelle überschreitet. Hierbei ist die Verwendung einer zeitlich gefilterten Radbeschleunigung deshalb von Vorteil, da die ungefilterte Radbeschleunigung aus der Ableitung der Radgeschwindigkeit üblicherweise stark störungsüberlagert ist. Als Filter kann beispielsweise ein PT1-Filter verwendet werden.

Weitere Merkmale, Vorteile und Anwendungsmöglichkeiten der vorliegenden Erfindung ergeben sich auch aus der nachfolgenden Beschreibung eines Ausführungsbeispiels des erfindungsgemäßen Verfahrens anhand von Figuren. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezüge.

Es zeigen schematisch:
- Fig. 1: einen Schaltplan einer kombinierten Fahrzeugbremsanlage mit hydraulisch betätigbaren Radbremsen an der Vorderachse, elektromechanisch betätigbaren Radbremsen an der Hinterachse und einem Elektromotor für rekuperative Bremsungen,
- Fig. 2a, 2b: je ein Diagramm, in dem die rekuperative Bremskraftverteilung zwischen Vorderachse und Hinterachse durch 0,2g rekuperative Verzögerung für ein heckgetriebenes Fahrzeug (Fig. 2a) und ein allradgetriebenes Fahrzeug (Fig. 2b) mit einer Verteilung 45/55 dargestellt ist,
- Fig. 3: die Verschiebung der Bremskraftverteilung durch eine Umverteilung der Anteile der regenerativen und der konventionellen Bremse anhand zweier Piktrogramme und
- Fig. 4: die Regelung des regenerativen Bremsmoments an der Hinterachse in Abhängigkeit vom Hinterachsschlupf in Diagrammen.

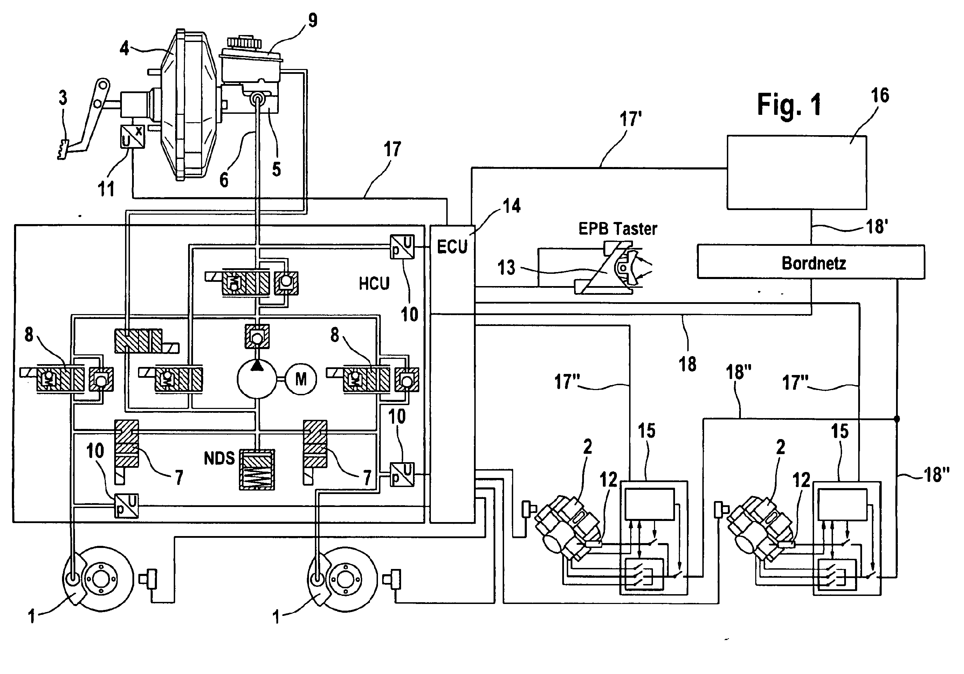

Ein Schaltplan der Fahrzeugbremsanlage, mittels der das erfindungsgemäße Verfahren durchführbar ist, ist in Fig. 1 dargestellt. Die Fahrzeugbremsanlage weist hydraulisch betätigbare Radbremsen 1 und elektromechanisch betätigbare Radbremsen 2 auf.

Die hydraulisch betätigbaren Radbremsen 1 sind an einer ersten Achse des Kraftfahrzeugs, der Vorderachse, angeordnet und werden mit Hilfe eines pedalbetätigten Vakuum-Bremskraftverstärkers 4 mit nachgeschaltetem Hauptzylinder 5 mit hydraulischem Druckmittel beaufschlagt. Zu diesem Zweck sind die hydraulisch betätigbaren Radbremsen 1 unter Zwischenschaltung von Einlassventilen 8 über eine Hydraulikleitung 6 mit dem Hauptzylinder 5 verbunden. Bei einem Druckabbau wird das eingesteuerte Druckmittel über Auslassventile 7 in einen drucklosen Druckmittelvorratsbehälter 9 abgelassen. Zur Ermittlung des eingesteuerten hydraulischen Drucks und zur Durchführung von Regelvorgängen, wie etwa Blockierschutzregelungen, sind mehrere Drucksensoren 10 vorgesehen, deren Ausgangssignale einer zentralen Steuer- und Regeleinheit 14 zugeführt werden.

Wie Fig. 1 weiterhin entnehmbar ist, sind an einer zweiten Achse, der Hinterachse des Kraftfahrzeugs, elektromechanisch betätigbare Radbremsen 2 angeordnet, die nach Maßgabe des in den hydraulisch betätigbaren Radbremsen 1 eingesteuerten hydraulischen Drucks betätigbar sind. Wie bereits erwähnt, wird der in die hydraulisch betätigbaren Radbremsen 1 eingesteuerte Druck mit Hilfe der Drucksensoren 10 ermittelt. Auf Grundlage dieses Druckwertes werden die elektromechanisch betätigbaren Radbremsen 2 an der Hinterachse angesteuert, d.h. unter Berücksichtigung einer Bremskraftverteilungsfunktion zwischen Vorder- und Hinterachse wird eine Zuspannkraft der elektromechanisch betätigbaren Radbremsen 2 eingestellt. Außerdem können die elektromechanisch betätigbaren Radbremsen 2 nach Maßgabe des Betätigungsweges des Bremspedals 3, das bedeutet gemäß dem Wunsch des Fahrzeugführers, angesteuert werden. Dazu wird der Betätigungsweg des Bremspedals 3 mit Hilfe eines Pedalwegsensors 11 ermittelt. Die Ansteuerung der elektromechanisch betätigbaren Radbremsen 2 wird dezentral durch zwei elektronische Steuereinheiten 15 vorgenommen, die je einer elektromechanisch betätigbaren Radbremse 2 zugeordnet sind. Die Versorgung mit elektrischer Energie wird über eine Versorgungsleitung 18" durchgeführt, welche die elektromechanisch betätigbaren Radbremsen 2 mit dem Bordnetz verbindet.

Wie in Fig.1 lediglich schematisch angedeutet ist, weisen die elektromechanisch betätigbaren Radbremsen 2 eine Feststellbremsvorrichtung 12 auf, mit der die Radbremsen zur Durchführung einer Feststellbremsung im zugespannten Zustand verriegelbar sind. Die Feststellbremsvorrichtung 12 ist mit Hilfe eines Bedienelementes 13 ansteuerbar, wobei die Abkürzung EPB auf die elektromechanisch betätigbare Radbremse hinweist. Das Bedienelement 13 ist als Taster ausgebildet und weist drei Schaltstellungen für die Befehle "Spannen", "Neutral" und "Lösen" auf, wobei lediglich die mittlere Neutralstellung eine stabile Schaltstellung darstellt.

Der Fahrerbremswunsch wird, wie bereits erwähnt, von dem Pedalwegsensor 11 erfasst und über eine Signalleitung 17 der elektronischen Steuer- und Regeleinheit 14 zugeführt. Der Steuer- und Regeleinheit 14 werden außerdem die Signale des Bedienelements 13 der Feststellbremse zugeführt. Die beiden dezentralen elektronischen Steuereinheiten 15 der elektromechanisch betätigbaren Radbremsen 2 sind ebenfalls über eine Signalleitung 17" mit der Steuer- und Regeleinheit 14 verbunden.

Ein Elektromotor 16, der einerseits als alleiniger Antrieb bei einem Elektroauto oder als zusätzlicher Antrieb bei einem Fahrzeug mit Verbrennungsmotor wirkt und andererseits im Generatorbetrieb zur Rückgewinnung von Bremsenergie eingesetzt wird, ist über eine weitere Signalleitung 17' mit der Steuer- und Regeleinheit 14 verbunden. Der Elektromotor 16 bezieht seine Versorgungsspannung im Antriebsfall über eine Versorgungsleitung 18' aus dem Bordnetz und speist über dieselbe Versorgungsleitung 18' im Generatorbetrieb elektrische Energie in das Bordnetz zurück. Im eben erwähnten Generatorbetrieb wirkt der Elektromotor 16 als Dynamo und generiert elektrischen Strom. Dabei entsteht eine Gegenkraft, die als ein weiteres Bremsmoment (Rekuperationsmoment) wirkt. Der als Generator betriebene Elektromotor 16 wirkt hierbei als Bremse an den Achsen, mit denen er über den (ggf. für den Elektromotor 16 separaten) Antriebsstrang verbunden ist. Im vorliegenden Beispiel wirkt der Generator an der Hinterachse HA. Die gesamte Bremskraft des Kraftfahrzeugs setzt sich daher aus der Bremskraft der hydraulisch betätigbaren Radbremsen 1, der Bremskraft der elektromechanisch betätigbaren Radbremsen 2 und der Bremskraft des als Generator wirkenden Elektromotors 16 zusammen. Diese drei Bremskräfte müssen in einer geeigneten Art und Weise angepasst werden, was durch eine geeignete Bremskraftverteilung ermöglicht wird.

Die Steuer- und Regeleinheit 14 nimmt nun anhand des von dem Pedalwegsensor 11 erfassten Bremswunsch eine Ermittlung der Verteilung der gesamten gewünschten oder aufgrund der Anforderung eines Sicherheitssystems erforderlichen Bremskraft auf die elektromechanisch betätigbaren Radbremsen 2, die hydraulisch betätigbaren Radbremsen 1 und in Rekuperation betriebenen Elektromotor 16 vor. Hierbei wird das an der Hinterachse anliegende Rekuperationsmoment derart begrenzt, dass der an mindestens einem Fahrzeugrad dieser Hinterachse anliegende Schlupf eine jeweils diesem Fahrzeugrad individuell zugeordnete erste Schlupfschwelle nicht überschreitet.

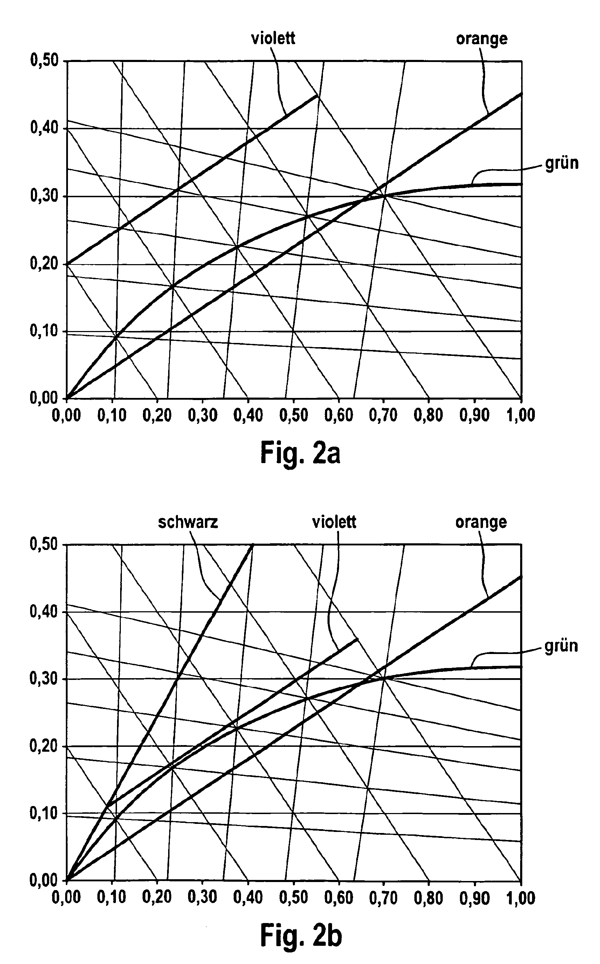

Bei den in Fig. 2a und 2b gezeigten Bremskraftverteilungen ist stets auf der Ordinate die Bremskraft an der Hinterachse - kurz auch HA - und auf der Abszisse die Bremskraft an der Vorderachse - kurz auch VA - aufgetragen. Die aufgetragenen Bremskraftverteilungen beziehen sich auf ein hydraulisches Bremssystem, das auf alle Räder gleichermaßen wirkt. An allen Rädern liegt somit der gleiche hydraulische Druck an. Zudem wirkt bei der Verteilung der Fig. 2a das rekuperative Bremsmoment über den Antriebsstrang lediglich auf die Hinterachse HA. Bei der in Fig. 2b dargestellten Verteilung wirkt das rekuperative Bremsmoment auf alle Achsen.

Fig. 2a zeigt eine Verschiebung der Bremskraftverteilung durch 0,2g rekuperative Verzögerung für ein heckgetriebenes Fahrzeug, wobei das rekuperative Bremsmoment lediglich auf die Hinterachse HA wirkt. In Fig. 2b ist die gleiche Verschiebung für ein allradgetriebenes Fahrzeug mit Verteilung (45/55) aufgetragen. Hierbei bedeuten die Linien der Farben

| | |
|---|---|
| orange: | die installierte hydraulische Bremskraftverteilung, die sich daraus ergibt, dass an allen Rädern liegt der gleiche hydraulische Druck anliegt, |
| grün: | die optimale Bremskraftverteilung, |
| schwarz: | die Bremskraftverteilung der rekuperativen Bremse (im gebremsten |

| | |
|---|---|
| | Fall), |
| violett: | die effektive Bremskraftverteilung bei bis 0,2g rein rekuperativem Bremsen und zusätzlichem konventionellen Bremsen bei stärkerer Verzögerung. |

Die im Folgenden beschriebene Regelstrategie verfolgt das Ziel, den Rekuperationsanteil bei einer Bremsung so einzustellen, dass die Fahrsicherheit weiterhin gewährleistet wird und trotzdem möglichst viel Energie zurückgewonnen werden kann. Der Rekuperationsanteil wird dabei derart begrenzt, dass kein kritischer, das Fahrzeug destabilisierender Schlupf an der Hinterachse auftritt. Durch die sensible Einregelung des von der Hinterachse zu übertragenden regenerativen Bremsmoments im Vorfeld kann die Anzahl der Eingriffe des Fahrdynamikreglers und damit die Häufigkeit der Pumpen- und Ventilschaltungen gegenüber der konventionellen Strategie deutlich reduziert werden.

Wie aus Fig. 2a 2b ersichtlich, ändert sich die effektive Bremskraftverteilung durch eine Umverteilung der Gesamtbremskraft zwischen der konventionellen und der rekuperativen Bremse. Dabei kann prinzipiell jeder Punkt zwischen der orangen Linie und der violetten Linie durch eine Kombination von rekuperativer und konventioneller Bremse erreicht werden, ohne dass Ventile der EBD geschaltet werden müssen. Bei der rekuperativen Bremse ist zu beachten, dass die mögliche Bremskraft durch die Leistung des Generators beschränkt ist und daher ab einer bestimmten, häufig geschwindigkeitsabhängigen, Grenzverzögerung (hier 0,2g) zusätzliche Bremskraft über die konventionelle Bremse aufgebaut werden muss.

Die violette Linie stellt die Grenzlinie dar, bei der das Rekuperationspotential optimal ausgeschöpft wird, und welche für einen maximalen Energiegewinn anzustreben ist. Gleichzeitig stellt diese Linie den aus Fahrstabilitätssicht ungünstigsten Fall dar, da hier die höchste Kraftschlussausnutzung an der Hinterachse verlangt wird und ein Überbremsen der Hinterachse vor der Vorderachse auftritt.

Durch eine sensible Schlupfüberwachung der Hinterachse lässt sich erkennen, ob die Kraftschlussgrenze an der Hinterachse bereits nahezu erreicht ist oder überschritten wird. Wird dieser instabile Zustand erkannt, lässt sich die Situation stabilisieren, indem das regenerative Bremsmoment reduziert und in gleichem Maße das Bremsmoment der konventionellen Bremse erhöht wird. Da sich im vorliegenden Fall die Reduzierung des regenerativen Momentes auf die Hinterachse auswirkt, die Erhöhung des konventionellen Bremsmoments aufgrund der installierten Bremskraftverteilung jedoch hauptsächlich auf die Vorderachse, wird in der Summe die Bremskraftverteilung so geändert, dass die Kraftschluss-Beanspruchung der Hinterachse reduziert wird.

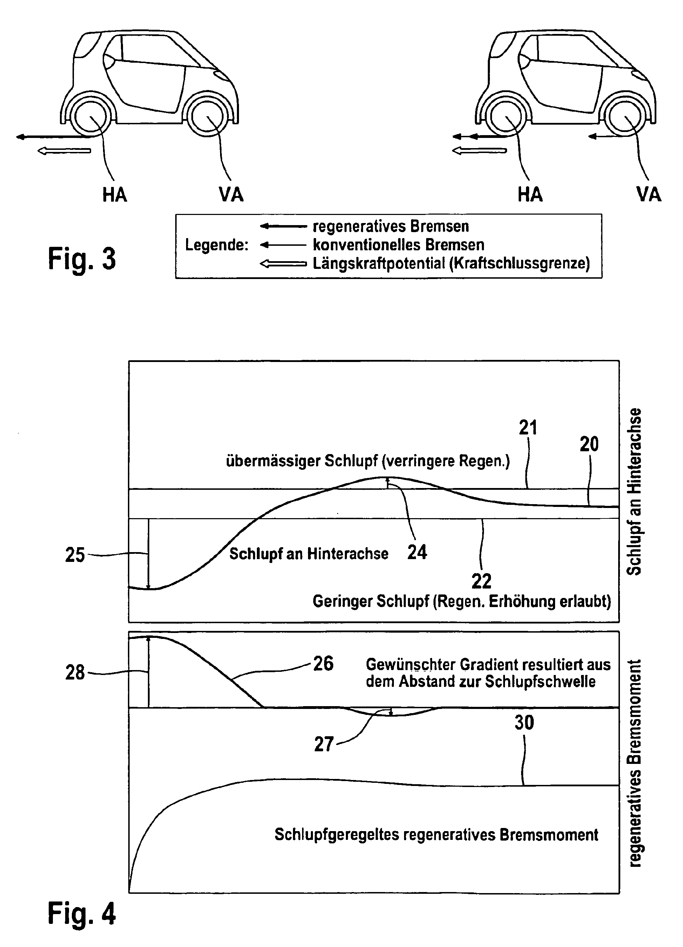

Fig. 3 zeigt eine derartige Verschiebung der Bremskraftverteilung durch eine Umverteilung der Anteile der regenerativen und der konventionellen Bremse in einem Piktogramm. In dem linken Bild ist dargestellt, dass das regenerative Bremsmoment an der Hinterachse HA die Kraftschlussgrenze (unterer Pfeil an der Hinterachse) überschreitet. Dieser Zustand bedingt eine nicht erwünschte Fahrzeuginstabilität.

Auf dem rechten Bild ist die Umverteilung der Bremskraft dargestellt. Da in dem linken Bild eine Längskraft erzeugt wurde, die das Längskraftpotential unterschreitet (bzw. die Kraftschlussgrenze überschreitet) muss das regenerative Bremsen reduziert werden. Um die Fahrerwunschverzögerung beizubehalten, wird zusätzlich zu dem reduzierten regenerativen Bremsmoment ein konventionelles Bremsmoment aufgebracht. Dieses konventionelle Bremsmoment wirkt, da es über ein Booster eingesteuert wird und keine Ventile betätigt werden, auf alle vier Räder, d.h. auf die Vorderachse VA und die Hinterachse HA. Hierdurch überschreitet das Gesamtmoment aus konventionellem und regenerativen Bremsen an der Hinterachse die Kraftschlussgrenze (unterer Pfeil an der Hinterachse) nicht mehr. Bei dem geschilderten Beispiel erfolgt demnach die Gesamtbremskraftumverteilung derart, dass ein regeneratives Bremsmoment, das lediglich an der Hinterachse wirkt, durch ein konventionelles Bremsmoment ersetzt wird, das auf alle vier Räder wirkt. Dieses Verfahren hat jedoch zur Folge, dass kein optimaler Wirkungsgrad erreicht wird.

Um den Wirkungsgrad zu steigern, kann in einem weiteren Ausführungsbeispiel eine Regelung derart erfolgen, dass an der Hinterachse kein konventionelles Bremsmoment zugelassen wird, um an der Hinterachse kein Längskraftpotential für die konventionelle Bremse zu "verschwenden", das für die rekuperative Bremse nicht zur Verfügung stünde. Dies kann z.B. mit dem Einsatz einer elektromechanischen Bremse an der Hinterachse realisiert werden, bei der das konventionelle Bremsmoment der Hinterachse frei wählbar ist. Bei einer derartigen Regelstrategie wird beim Bremsen zunächst ausschließlich regenerativ gebremst und keine konventionelle Bremsung zugelassen bis das maximale Rekuperationsmoment erreicht ist. Anschließend werden die Reibbremsen zunächst nur an der Vorderachse zugeschaltet, um die Hecklastigkeit der Bremskraftverstärkung zu reduzieren. Sollte diese Maßnahme zu einer zu großen Frontlastigkeit der Bremskraftverteilung führen, so wird auch an der Hinterachse ein Teil der erforderlichen Bremskraft mittels der elektromechanischen Bremsen aufgebracht und demzufolge der regenerative Anteil reduziert, wobei die Verteilung der Bremskraft auf Vorder- und Hinterachse derart eingestellt wird, dass dann die Verteilung möglichst der Optimalverteilung folgt. Hierbei ist es auch möglich, solange die den Bremsdruck verteilenden Ventile nicht überbelastet sind, auch ein konventionelles Bremssystem so zu regeln, dass die den Bremsdruck auf die Hinterachse steuernden Ventile geschlossen werden, wenn lediglich an der Vorderachse eine konventionelle Bremskraft erzeugt werden soll.

Umgekehrt zu dem in Fig. 3 dargestellten Beispiel kann der regenerative Bremsmomenten-Anteil erhöht werden, wenn die Schlupfauswertung ergibt, dass an der Hinterachse HA noch Kraftschlusspotential vorhanden ist.

Die Entscheidung, ob der regenerative Bremsmomentanteil weiter erhöht werden kann oder abgesenkt werden muss, hängt davon ab, ob der Hinterachs-Schlupf unter- oder oberhalb eines vorgegebenen Sollschlupfs liegt, wobei die Größe der Änderung vom Abstand von der Schlupfschwelle abhängig ist. Dies ist in Fig. 4 dargestellt, die eine Regelung des regenerativen Bremsmoments in Abhängigkeit vom Hinterachs-schlupf zeigt.

In dem oberen Bild der Fig. 4 ist der Schlupf 20 in Abhängigkeit von der Zeit aufgetragen. In einem ersten Abschnitt liegt der Schlupf 20 an der Hinterachse unterhalb einer zweiten Schlupfschwelle 22, wobei der Abstand zwischen dem Schlupf 20 und der Schlupfschwelle 22 mit dem nach unten zeigenden Pfeil 25 verdeutlicht ist. Im weiteren Verlauf ändert sich der Schlupf 20 derart, dass er in einem zweiten Abschnitt oberhalb einer ersten Schlupfschwelle 21 liegt. Der Abstand zwischen dem Schlupf 20 und der ersten Schlupfschwelle 21 ist mit dem Pfeil 24 markiert.

Im unteren Bild der Fig. 4 ist über einer dem Zeitraum des oberen Bildes entsprechenden Zeitskala oben die eingeregelte Änderung des regenerativen Bremsmoments 26 an der Hinterachse aufgetragen. Im ersten Abschnitt, in dem der Schlupf 20 unterhalb der zweiten Schlupfschwelle 22 liegt, wird das regenerative Bremsmoment stark erhöht, wobei der Gradient aufgrund des großen Abstands des Schlupfes von der zweiten Schlupfschwelle 22 groß ist (vgl. Pfeil 28). In dem zweiten Abschnitt, in dem der Schlupf 20 oberhalb der ersten Schlupfschwelle 21 liegt, wird das regenerative Bremsmoment etwas verringert. Da der Abstand des Schlupfes 20 von der ersten Schlupfschwelle 21 gering ist, ist auch die Schlupfverringerung klein (siehe Pfeil 27). Das hieraus resultierende Rekuperationsmoment an der Hinterachse ist in dem unteren Bild der Fig. 4 als Kurve 30 über der Zeit aufgetragen.

Bei der Hinterachs-Schlupfberechnung sollte dem Select-Low-Prinzip folgend das Rad betrachtet werden, welches bereits den größeren Schlupf aufweist. Zusätzlich kann in die Schlupfberechnung die (zeitlich gefilterte) Radbeschleunigung mit einfließen, da über den Vergleich der Radbeschleunigung mit der Fahrzeugverzögerung eine sich abzeichnende Instabilität bereits früher erkannt werden kann als wenn darauf gewartet wird, dass der lediglich aus der Radgeschwindigkeit berechnete Schlupf die Schlupfschwelle überschreitet.

Da die Regelung des rekuperativen Bremsmomentenanteils sensibel unterhalb der normalen EBD-Eintrittsschwelle erfolgt, lässt sich die Häufigkeit der EBD-Eingriffe nahezu auf das Niveau des konventionell gebremsten Fahrzeugs reduzieren. Ehe es zum EBD Eingriff kommt, wird bereits aufgrund der Schlupferkennung der Regenerative Bremsmomentenanteil reduziert, so dass bei Erreichen der EBD-Schwellen bereits lediglich die konventionelle Bremse aktiv ist.

Außerdem wird durch die sensible Regelung die Überbremsung der Hinterachse begrenzt, was die Fahrstabilität fördert, und damit die Häufigkeit von ESP-Eingriffen reduziert.

## Patentansprüche

1. Verfahren zum Betrieb einer Fahrzeugbremsanlage, insbesondere für Kraftfahrzeuge mit mindestens einer Vorderachse (VA) und mindestens einer Hinterachse (HA), wobei jeder Achse (VA, HA) mindestens zwei Fahrzeugräder zugeordnet sind, wobei mindestens eine ein Bremsmoment erzeugende, vorzugsweise hydraulisch betätigbare Radbremse an der mindestens einen Vorderachse (VA) und/oder der mindestens einen Hinterachse (HA) vorgesehen ist, wobei die einer Achse (VA, HA) zugeordneten Fahrzeugräder zumindest teilweise von einem Elektromotor (16) angetrieben werden, der während einer Rekuperation von Bremsenergie als Generator betreibbar ist und dabei ein bremsendes Rekuperationsmoment auf die jeweilige Achse (VA, HA) ausübt, und das an der mindestens einen Hinterachse (HA) anliegende Rekuperationsmoment derart begrenzt wird, dass der an mindestens einem Fahrzeugrad dieser Hinterachse (HA) anliegende Schlupf (20) eine jeweils diesem Fahrzeugrad individuell zugeordnete erste Schlupfschwelle (21) nicht oder nur unwesentlich überschreitet,
**dadurch gekennzeichnet, dass** das an der mindestens einen Hinterachse (HA) anliegende Rekuperationsmoment erhöht wird, wenn der an mindestens einem Fahrzeugrad dieser Hinterachse (HA) anliegende Schlupf (20) eine diesem Fahrzeugrad individuell zugeordnete zweite Schlupfschwelle (22) unterschreitet.

2. Verfahren nach Anspruch 1, **dadurch gekennzeichnet, dass** die einem Fahrzeugrad individuell zugeordnete erste Schlupfschwelle (21) veränderlich ist.

3. Verfahren nach einem der vorhergehenden Ansprüche, **dadurch gekennzeichnet, dass** die Begrenzung des Rekuperationsmoments durch die Betrachtung des Schlupfes des Fahrzeugrades der mindestens einen Hinterachse (HA) erfolgt, das den größeren Schlupf (20) aufweist.

4. Verfahren nach Anspruch 3, **dadurch gekennzeichnet, dass** die Änderung des Rekuperationsmoments bei Unterschreitung der zweiten Schlupfschwelle (22) des Fahrzeugrades der mindestens einen Hinterachse (HA) erfolgt, das den größeren Schlupf (20) aufweist.

5. Verfahren nach einem der vorhergehenden Ansprüche, **dadurch gekennzeichnet, dass** das Rekuperationsmoment dadurch begrenzt wird, dass die Verteilung der Gesamtbremskraft zwischen der konventionellen und der rekuperativen Bremse verändert wird.

6. Verfahren nach einem der vorhergehenden Ansprüche, **dadurch gekennzeichnet, dass** die Größe der Änderung des Rekuperationsmoments von dem Abstand des ermittelten Schlupfes von der ersten Schlupfschwelle (21) oder der zweiten Schlupfschwelle (22) abhängt.

7. Verfahren nach einem der vorhergehenden Ansprüche, dadurch gekenntzeichnet, dass zur Berechnung des Schlupfes (20) auch die Fahrzeugbeschleunigung sowie die gefilterte Fahrzeugradbeschleunigung herangezogen werden.

8. Fahrzeugbremsanlage, insbesondere für Kraftfahrzeuge mit mindestens einer Vorderachse (VA) und mindestens einer Hinterachse (HA), wobei jeder Achse mindestens zwei Fahrzeugräder zugeordnet sind, wobei mindestens eine ein Bremsmoment erzeugende, vorzugsweise hydraulisch betätigbare Radbremse (1,2) an der mindestens einen Vorderachse (VA) und/oder der mindestens einen Hinterachse (HA) sowie eine Steuer- und/oder Regeleinheit (14) vorgesehen ist, wobei die einer Achse zugeordneten Fahrzeugräder zumindest teilweise von einem Elektromotor (16) angetrieben werden, der während einer Rekuperation von Bremsenergie als Generator betreibbar ist und dabei ein bremsendes Rekuperationsmoment auf die jeweilige Achse ausübt und die Steuer- und/oder Regeleinheit (14) ein an einer Hinterachse (HA) anliegendes Rekuperationsmoment derart begrenzt, dass der an mindestens einem Fahrzeugrad dieser Hinterachse (HA) anliegende Schlupf (20) eine jeweils diesem Fahrzeugrad individuell zugeordnete erste Schlupfschwelle (21) nicht oder nur unwesentlich überschreitet,
**dadurch gekennzeichnet, dass** das an der mindestens einen Hinterachse (HA) anliegende Rekuperationsmoment erhöht wird, wenn der an mindestens einem Fahrzeugrad dieser Hinterachse (HA) anliegende Schlupf (20) eine diesem Fahrzeugrad individuell zugeordnete zweite Schlupfschwelle (22) unterschreitet.

## Claims

1. Method for operating a vehicle brake system, in particular for motor vehicles having at least one front axle (FA) and at least one rear axle (RA), wherein each axle (FA, RA) is assigned at least two vehicle wheels, wherein at least one wheel brake, which generates a braking torque and can preferably be activated hydraulically, is provided on the at least one front axle (FA) and/or the at least one rear axle (RA), wherein the vehicle wheels which are assigned to an axle (FA, RA) are at least partially driven by an electric motor (16) which can be operated as a generator during regeneration of braking energy and in the process exerts a braking regeneration torque on the respective axle (FA, RA), and the regeneration torque acting on the at least one rear axle (RA) is limited in such a way that the slip (20) present at at least one vehicle wheel of this rear axle (RA) does not exceed, or exceeds only to an insignificant degree, a first slip threshold (21) which is respectively individually assigned to this vehicle wheel, **characterized in that** the regeneration torque acting on the at least one rear axle (RA) is increased if the slip (20) present at at least one vehicle wheel of this rear axle (RA) drops below a second slip threshold (22) which is individually assigned to this vehicle wheel.

2. Method according to Claim 1, **characterized in that** the first slip threshold (21) which is individually assigned to a vehicle wheel is variable.

3. Method according to one of the preceding claims, **characterized in that** the limitation of the regeneration torque is carried out by taking into account the slip of the vehicle wheel of the at least one rear axle (RA) which has the greater slip (20).

4. Method according to Claim 3, **characterized in that** the change in the regeneration torque takes place when the slip drops below the second slip threshold (22) of the vehicle wheel of the at least one rear axle (RA)which has the greater slip (22).

5. Method according to one of the preceding claims, **characterized in that** the regeneration torque is limited by virtue of the fact that the distribution of the total braking force between the conventional brake and the regenerative brake is changed.

6. Method according to one of the preceding claims, **characterized in that** the magnitude of the change in the regeneration torque depends on the distance of the determined slip from the first slip threshold (21) or from the second slip threshold (22).

7. Method according to one of the preceding claims, **characterized in that** the vehicle acceleration and the filtered vehicle wheel acceleration are also used for the calculation of the slip (20).

8. Vehicle brake system, in particular for motor vehicles having at least one front axle (FA) and at least one rear axle (RA), wherein each axle is assigned at least two vehicle wheels, wherein at least one wheel brake (1, 2), which generates a braking torque and can preferably be activated hydraulically, is provided on the at least one front axle (FA) and/or the at least one rear axle (RA), and an open-loop and/or closed-loop control unit (14) is provided, wherein the vehicle wheels which are assigned to an axle are at least partially driven by an electric motor (16) which can be operated as a generator during regeneration of braking energy and in the process exerts a braking regeneration torque on the respective axle and the open-loop and/or closed-loop control unit (14) limits a regeneration torque acting on a rear axle (RA) in such a way that the slip (20) present at at least one vehicle wheel of this rear axle (RA) does not exceed, or exceeds only to an insignificant degree, a first slip threshold (21) which is respectively individually assigned to this vehicle wheel, **characterized in that** the regeneration torque acting on the at least one rear axle (RA) is increased if the slip (20) present at at least one vehicle wheel of this rear axle (RA) drops below a second slip threshold (22) which is individually assigned to this vehicle wheel.

## Revendications

1. Procédé de fonctionnement d'un système de freinage de véhicule, en particulier pour véhicules automobiles comprenant au moins un essieu avant (VA) et au moins un essieu arrière (HA), au moins deux roues de véhicule étant associées à chaque essieu (VA, HA), au moins un frein de roue produisant un couple de freinage et pouvant être actionné de préférence hydrauliquement étant prévu sur l'au moins un essieu avant (VA) et/ou l'au moins un essieu arrière (HA), les roues de véhicule associées à un essieu (VA, HA) étant entraînées au moins partiellement par un moteur électrique (16) qui peut fonctionner en tant que générateur pendant une récupération d'énergie de freinage et exerce à cet effet un couple de récupération freinant sur l'essieu respectif (VA, HA), et le couple de récupération appliqué sur l'au moins un essieu arrière (HA) étant limité de telle sorte que le patinage (20) appliqué sur au moins une roue de véhicule de cet essieu arrière (HA) n'excède pas ou n'excède que seulement de manière peu importante un premier seuil de patinage (21) associé individuellement respectivement à cette roue de véhicule, **caractérisé en ce que** le couple de récupération appliqué sur l'au moins un essieu arrière (HA) est augmenté lorsque le patinage (20) appliqué sur au moins une roue de véhicule de cet essieu arrière (HA) passe en dessous d'un deuxième seuil de patinage (22) associé individuellement à cette roue de véhicule.

2. Procédé selon la revendication 1, **caractérisé en ce que** le premier seuil de patinage (21) associé individuellement à une roue de véhicule est modifiable.

3. Procédé selon l'une quelconque des revendications précédentes, **caractérisé en ce que** la limitation du couple de récupération s'effectue par la prise en considération du patinage de la roue de véhicule de l'au moins un essieu arrière (HA) qui présente le patinage plus élevé (20).

4. Procédé selon la revendication 3, **caractérisé en ce que** la modification du couple de récupération s'effectue lorsque l'on passe en dessous du deuxième seuil de patinage (22) de la roue de véhicule de l'au moins un essieu arrière (HA) qui présente le patinage plus élevé (20).

5. Procédé selon l'une quelconque des revendications précédentes, **caractérisé en ce que** le couple de récupération est limité par le fait que la répartition de la force de freinage totale entre le frein conventionnel et le frein à récupération est modifiée.

6. Procédé selon l'une quelconque des revendications précédentes, **caractérisé en ce que** l'ampleur de la modification du couple de récupération dépend de l'écart entre le patinage déterminé et le premier seuil de patinage (21) ou le deuxième seuil de patinage (22).

7. Procédé selon l'une quelconque des revendications précédentes, **caractérisé en ce que**, pour le calcul du patinage (20), sont utilisées également l'accélération du véhicule ainsi que l'accélération de roue de véhicule filtrée.

8. Système de freinage de véhicule, en particulier pour véhicules automobiles comprenant au moins un essieu avant (VA) et au moins un essieu arrière (HA), au moins deux roues de véhicule étant associées à chaque essieu, au moins un frein de roue (1, 2) produisant un couple de freinage et pouvant être actionné de préférence hydrauliquement étant prévu sur l'au moins un essieu avant (VA) et/ou l'au moins un essieu arrière (HA) et une unité de commande et/ou de régulation (14) étant également prévue, les roues de véhicule associées à un essieu étant entraînées au moins partiellement par un moteur électrique (16) qui peut fonctionner en tant que générateur pendant une récupération d'énergie de freinage et exerce à cet effet un couple de récupération freinant sur l'essieu respectif, et l'unité de commande et/ou de régulation (14) limitant un couple de récupération appliqué à un essieu arrière (HA) de telle sorte que le patinage (20) appliqué sur au moins une roue de véhicule de cet essieu arrière (HA) n'excède pas ou n'excède que seulement de manière peu importante un premier seuil de patinage (21) associé individuellement respectivement à cette roue de véhicule, **caractérisé en ce que** le couple de récupération appliqué sur l'au moins un essieu arrière (HA) est augmenté lorsque le patinage (20) appliqué sur au moins une roue de véhicule de cet essieu arrière (HA) passe en dessous d'un deuxième seuil de patinage (22) associé individuellement à cette roue de véhicule.
